# EUROPÄISCHE PATENTSCHRIFT

(11) **EP 2 688 802 B1**
(45) Veröffentlichungstag und Bekanntmachung des Hinweises auf die Patenterteilung: **10.05.2017**
(21) Anmeldenummer: 12707588.5
(22) Anmeldetag: 07.03.2012
(51) Int. Cl.: B64F 5/00

(54) **VERFAHREN UND VORRICHTUNG ZUR MONTAGE WENIGSTENS EINES SITZES IN EIN LUFTFAHRZEUG**
METHOD AND DEVICE FOR ASSEMBLING AT LEAST ONE SEAT INTO AN AIRPLANE
PROCÉDÉ ET DISPOSITIF DE MONTAGE D'AU MOINS UN SIÈGE DANS UN AÉRONEF

(30) Priorität: 22.03.2011 DE 102011014695
(43) Veröffentlichungstag der Anmeldung: 29.01.2014
(73) Patentinhaber: Airbus Defence and Space GmbH, 85521 Ottobrunn (DE)
(72) Erfinder: ROLLFINK, Patrick, 22765 Hamburg (DE); MEISTER, Daniel, 80797 München (DE)
(74) Vertreter: Kastel, Stefan
(86) Internationale Anmeldenummer: PCT/EP2012/053885
(87) Internationale Veröffentlichungsnummer: WO 2012/126731

(56) Entgegenhaltungen:
- EP-A2- 2 045 118
- GB-A- 2 426 549
- US-A- 5 205 571

## Beschreibung

Die Erfindung betrifft ein Sitzmontageverfahren zur Montage wenigstens eines Sitzes in ein Luftfahrzeug sowie eine Sitzmontagevorrichtung zur Montage wenigstens eines Sitzes in ein Luftfahrzeug. Weiter betrifft die Erfindung Einrichtungen zur Verwendung in einer solchen Sitzmontagevorrichtung sowie in einem solchen Sitzmontageverfahren.

Luftfahrzeuge, die zum Transport von Passagieren dienen, weisen eine Vielzahl von Sitzen für die Passagiere auf, die innerhalb einer Passagierkabine fest mit dem Luftfahrzeug verankert werden müssen. Um den Passagierraum optimal auszunützen, ist eine exakte Positionierung der Sitze wünschenswert, damit den Passagieren einerseits ein einheitlicher ausreichender Platz zur Verfügung gestellt wird, andererseits aber auch kein Platz verschwendet wird.

Die Verankerung der Sitze erfolgt meist in in Längsrichtung des Luftfahrzeuges in einem Boden der Passagierkabine eingebauten Sitzschienen.

Bei einem derzeit bei der Firma Airbus Deutschland GmbH durchgeführten Sitzmontageverfahren zum Einbau der Sitze in Luftfahrzeuge werden zunächst die Positionen, an denen die Sitze eingebaut werden sollen, von vorne nach hinten mittels einer Lehre auf der Sitzschiene markiert. Dabei können Messfehler auftreten, die sich am Ende kumulieren. Des Weiteren werden je nach Flugzeuggröße mindestens 48 Sitze eingebaut, so dass dieser Verfahrensschritt sehr viel Zeit in Anspruch nimmt.

Die Sitze werden vom Sitzhersteller bis ins Lager oder bis ans Flugzeug geliefert und werden dann von Hand auf einfache Transportwagen gehoben. Mit diesem Transportwagen werden die Sitze bis vor die Flugzeugtür transportiert, um dann von Hand in die Flugzeugkabine an die markierte Position getragen zu werden. Dies beinhaltet schwere körperliche Arbeit, zumal mindestens 48 Sitze ins Flugzeug installiert werden. Während des Transports der Sitze besteht die Möglichkeit, mit dem Sitz gegen schon eingebaute Komponenten im Flugzeug zu stoßen und diese eventuell zu beschädigen. Auch birgt das Tragen der Sitze ein erhöhtes Verletzungsrisiko. Die Sitze werden dann in die Sitzschiene gehoben, wobei es zu Verkantungen der Sitzfüße in der Sitzschiene kommen kann. Anschließend wird der Sitz um einen halben Zoll (ca. 13 mm) in Längsrichtung der Sitzschiene (in x-Richtung) verschoben. Auch diese Arbeitsschritte beinhalten ein hohes Maß an schwerer körperlicher Arbeit.

Somit ist der derzeitige Sitzeinbauprozess für zivile Luftfahrzeuge geprägt durch eine erhöhte Rüstzeit, erhöhten Personal- und Zeitaufwand, erhöhte Variabilität im Prozess, erhöhten Anteil schwerer körperlicher Arbeit sowie erhöhten Verletzungs- und Beschädigungsrisiken.

US 5 205 571 A beschreibt ein Sitzmontageverfahren zum Montieren eines Sitzes in einem Luftfahrzeug, wobei der Sitz unter Verwendung eines Rahmens in das Luftfahrzeug transportiert und dann an eine Sitzbefestigungseinrichtung übergeben wird.

Aufgabe der Erfindung ist es daher, ein verbessertes Verfahren sowie eine verbesserte Vorrichtung zur Montage von Sitzen in Luftfahrzeugen zu schaffen.

Diese Aufgabe wird durch ein Sitzmontageverfahren nach Anspruch 1 sowie eine Sitzmontagevorrichtung nach dem Nebenanspruch gelöst. Eine Sitzeinbaueinrichtung sowie eine Sitztransporteinrichtung zur Verwendung in dem erfindungsgemäßen Sitzmontageverfahren sowie der erfindungsgemäßen Sitzmontagevorrichtung sind Gegenstand der weiteren Nebenansprüche.

Vorteilhafte Ausgestaltungen der Erfindung sind Gegenstand der Unteransprüche.

Die Erfindung schlägt einen Sitzeinbauprozess mit Hilfe von gekoppelten Sitztransport- und Sitzeinbaueinrichtungen vor.

Bevorzugt ist eine Sitztransporteinrichtung zum Transport der Sitze vom Hersteller bis ins Flugzeug, eine nahtlose Übergabe des Sitzes von der Sitztransporteinrichtung in eine Sitzeinbauvorrichtung, die vorab mittels eines Einmesssystems positioniert wurde, und eine Absenkung des Sitzes in eine Sitzschiene und eine Verschiebung an die zertifizierte Position durch die Sitzeinbaueinrichtung vorgesehen.

Durch den Einsatz von gekoppelten Transport- und Einbaueinrichtungen im Sitzeinbauprozess kann der Sitzeinbau vereinfacht, beschleunigt und qualitativ verbessert werden.

Die Erfindung schafft insbesondere ein Sitzmontageverfahren zur Montage wenigstens eines Sitzes in ein Luftfahrzeug mit den Schritten:
a) Positionieren einer Sitzeinbaueinrichtung an einer vorgegebenen Montageposition im Luftfahrzeug,
b) Transport des wenigstens einen Sitzes mittels einer Sitztransporteinrichtung ins Innere des Luftfahrzeuges zu der Sitzeinbaueinrichtung,
c) Übergabe des Sitzes von der Sitztransporteinrichtung an die Sitzeinbaueinrichtung,
d) Einbau des Sitzes mittels der an der Montageposition positionierten Sitzeinbaueinrichtung.

Die Bezeichnung der Schritte mit a), b), ... dient rein der einfacheren Bezugnahme auf die Schritte und soll keinerlei Beschränkung auf irgendeine Reihenfolge der Schritte bedeuten. Die Schritte können in jeder logisch denkbaren Reihenfolge durchgeführt werden. Insbesondere ist die Reihenfolge der Schritte a) und b) beliebig; vorzugsweise wird der Schritt c) nach Durchführung beider Schritte a) und b) durchgeführt. Weiter vorzugsweise wird der Schritt d) nach dem Schritt c) durchgeführt.

In bevorzugter Ausgestaltung des Sitzmontageverfahrens enthält d) folgende Schritte:
d1) Absenken des Sitzes in eine am Luftfahrzeug angeordnete Sitzschiene und
d2) Verschieben des Sitzes an die gewünschte Sitzposition.
Beide Schritte d1) und d2) werden weiter vorzugsweise mittels der Sitzeinbaueinrichtung durchgeführt.

Schritt b) umfasst in weiter bevorzugter Ausgestaltung des Sitzmontageverfahrens den Schritt:
b1) Transportieren des wenigstens einen Sitzes von einem Sitzhersteller oder Sitzlieferanten bis hin zu der in dem Luftfahrzeug positionierten Sitzeinbaueinrichtung.

Vorzugsweise dient die Sitzeinbaueinrichtung einerseits zur exakten Positionierung der Sitze und andererseits zur Montage der Sitze. Die Sitztransporteinrichtung lässt sich mit der Sitzeinbaueinrichtung koppeln, um die in das Luftfahrzeug hineintransportierten Sitze zwecks Montage zu übergeben. In besonders bevorzugter Ausgestaltung der Erfindung sind pro Sitz oder Sitzkombination eine Sitztransporteinrichtung vorgesehen. Die Sitze können direkt beim Sitzhersteller mit der Sitztransporteinrichtung versehen werden. Jeder Sitz kann so über den gesamten Transportweg mit der Sitztransporteinrichtung transportiert werden, wobei die Sitze auch bei der Übergabe in Transporteinheiten wie Container, LKWs, Paletten usw. mit der Transporteinrichtung gehandhabt werden können. Dies erleichtert den Sitztransport erheblich. Zur Positionierung der Sitzeinbaueinrichtung umfasst Schritt a) vorzugsweise:
a1) Positionieren der Sitzeinbaueinrichtung in einer quer zur Sitzschiene verlaufenden Richtung anhand der Sitzschiene und
a2) Positionieren der Sitzeinbaueinrichtung in Längsrichtung der Sitzschiene mittels eines optischen Entfernungsmessgeräts.

Die Sitzeinbaueinrichtung ist hierzu in bevorzugter Ausgestaltung mit einer die Sitzschiene erfassenden ersten Positioniereinrichtung und mit einer zweiten, das optische Entfernungsmessgerät enthaltenden Positioniereinrichtung versehen.

Die erste Positioniereinrichtung kann beispielsweise zwei oder mehr passende Eingreifelemente zum Eingreifen in zwei parallele Sitzschienen umfassen. Diese Eingreifelemente können formschlüssig in die Sitzschiene eingeführt werden, so dass die Sitzeinbaueinrichtung passend zur Sitzschiene nur noch in Längsrichtung zur Sitzschiene verschiebbar fixiert ist. Die Positionierung entlang der Sitzschiene erfolgt dann vorzugsweise mit der zweiten Positioniereinrichtung. Hierzu kann an der Sitzeinbaueinrichtung ein Laserentfernungsmesser oder dergleichen vorgesehen sein, welcher den Abstand der Sitzeinbaueinrichtung in Längsrichtung der Sitzschiene zu einem Referenzpunkt innerhalb des Luftfahrzeuges ausmisst.

Die Sitztransporteinrichtung und die Sitzeinbaueinrichtung sind zur gegenseitigen Kopplung zwecks passender Positionierung und Übergabe der Sitze ausgebildet.

In bevorzugter Ausgestaltung weist eine der beiden Einrichtungen eine Positionieraufnahme auf, in die ein Positioniervorsprung der anderen Einrichtung eingreift. Die entsprechende Aufnahme und der Vorsprung können selbst ausrichtend ausgebildet sein, z.B. kann der Vorsprung eine konisch zulaufende Spitze und die Aufnahme eine konische Verengung aufweisen.

Eine vorteilhafte Ausführungsform des Sitzmontageverfahrens ist dadurch gekennzeichnet, dass Schritt c) umfasst:
c1) Einfahren der Sitztransporteinrichtung in einen Formschluss mit der positionierten Sitzeinbaueinrichtung;
c2) Ergreifen und Halten des Sitzes mittels einer an der Sitzeinbaueinrichtung angebrachten Sitzerfassungs- und Halteeinrichtung; und
c3) Entfernen der Sitztransporteinrichtung.

Eine weitere vorteilhafte Ausgestaltung des Sitzmontageverfahrens weist den nach Schritt d) erfolgenden Schritt:
e) Lösen der Sitzerfassungs- und Halteeinrichtung und Entfernen der Sitzeinbaueinrichtung
auf.

Gemäß eines weiteren Aspekts schafft die Erfindung eine Sitzmontagevorrichtung zur Montage wenigstens eines Sitzes in einem Luftfahrzeug mit:
einer Sitzeinbaueinrichtung zum Positionieren und Einbauen des Sitzes an der gewünschten Montageposition und
einer Sitztransporteinrichtung zum Transportieren des Sitzes von einem Sitzlieferanten bis zur gewünschten Montageposition,
wobei die Sitzeinbaueinrichtung und die Sitztransporteinrichtung zueinander komplementäre Kopplungseinrichtungen aufweisen, mittels denen die beiden Einrichtungen formschlüssig erfassend ineinander eingreifen können, um den Sitz von der Sitztransporteinrichtung zu der an der Montageposition ausgerichteten Sitzeinbaueinrichtung zu übergeben.

Vorteilhafterweise ist vorgesehen, dass die Sitzeinbaueinrichtung eine erste Positioniereinrichtung zum Positionieren der Sitzeinbaueinrichtung in einer Richtung quer zu einer Sitzschiene des Luftfahrzeuges und eine zweite Positioniereinrichtung zum Positionieren der Sitzeinbaueinrichtung in einer Längsrichtung der Sitzschiene aufweist.

Vorzugsweise weist die erste Positioniereinrichtung einen Eingreifvorsprung zum positionierenden Eingreifen in die Sitzschiene auf.

Vorteilhafterweise weist die zweite Positioniereinrichtung eine optische Messeinrichtung zum Messen einer Entfernung entlang der Sitzschiene auf.

Zum Aufnehmen und zum Montieren des Sitzes ist weiter vorteilhaft vorgesehen, dass die Sitzeinbaueinrichtung eine Sitzerfassungs- und Halteeinrichtung zum Erfassen des mittels der Sitztransporteinrichtung zu der Montageposition transportierten Sitzes aufweist.

Bevorzugt ist vorgesehen, dass die Sitzerfassungs- und Halteeinrichtung mehrere Paare Spannbacken umfasst, die durch eine Bedienperson betätigt je einen Sitzfuss des Sitzes erfassen und festhalten können.

In weiter bevorzugter Ausgestaltung der Sitzmontagevorrichtung ist vorgesehen, dass die Sitzeinbaueinrichtung zum Absenken des Sitzes bis zum Eingriff in eine Sitzschiene des Luftfahrzeuges und zum Verschieben des Sitzes innerhalb der Sitzschiene ausgebildet ist.

Weitere Aspekte der Erfindung betreffen die Sitzeinbaueinrichtung und die Sitztransporteinrichtung jeweils einzeln.

Demgemäß ist entsprechend eines weiteren Aspektes der Erfindung eine Sitzeinbaueinrichtung zum Einbauen eines Sitzes in ein Luftfahrzeug vorgesehen, die vorteilhafterweise zum Positionieren des Sitzes und zum Einbauen ausgebildet ist.

Gemäß eines weiteren Aspekts der Erfindung ist eine Sitztransporteinrichtung zum Transportieren wenigstens eines Sitzes für ein Luftfahrzeug von einem Sitzhersteller bis in das Luftfahrzeug hinein vorgesehen.

Die Sitzeinbaueinrichtung ist zum Koppeln mit der Sitztransporteinrichtung ausgebildet. Die Sitztransporteinrichtung ist zum Koppeln mit der Sitzeinbaueinrichtung ausgebildet.

In bevorzugter Ausgestaltung weist die Sitzeinbaueinrichtung eine erste Positioniereinrichtung zum Positionieren der Sitzeinbaueinrichtung in einer quer zur Sitzschiene verlaufenden Richtung anhand der Sitzschiene auf.

In einer weiteren vorteilhaften Ausgestaltung weist die Sitzeinbaueinrichtung eine zweite Positioniereinrichtung zum Positionieren der Sitzeinbaueinrichtung in Längsrichtung der Sitzschiene auf. Die zweite Positioniereinrichtung weist vorteilhafterweise ein optisches Entfernungsmessgerät auf.

Die Sitzeinbaueinrichtung weist vorteilhafterweise eine Kopplungseinrichtung auf, mittels der sie in Formschluss mit der Sitztransporteinrichtung koppelbar ist, um den Sitz von der Sitztransporteinrichtung zu übernehmen.

Die Sitztransporteinrichtung weist vorteilhafterweise eine zweite Kopplungseinrichtung zum Koppeln an die Sitzeinbaueinrichtung zur Übergabe des Sitzes auf.

Die Sitzeinbaueinrichtung weist vorteilhafterweise eine Sitzerfassungs- und Halteeinrichtung zum Ergreifen und Halten des Sitzes bei der Übergabe und Montage des Sitzes auf.

Die Sitzerfassungs- und Halteeinrichtung weist vorzugsweise mehrere Paare von Spannbacken auf.

In einer bevorzugten Ausgestaltung sind vier Paare von Spannbacken zum gleichzeitigen Erfassen von vier Füßen des zu montierenden Sitzes vorgesehen.

Vorzugsweise ist die Sitzeinbaueinrichtung derart ausgebildet, dass alle Verankerungspunkte des Sitzes, z.B. drei, vier oder mehr Füße des Sitzes, gleichzeitig in entsprechende Sitzschienen eingeführt und gleichzeitig in Montageposition verschoben werden können.

In bevorzugter Ausgestaltung der Erfindung wird die Sitzeinbaueinrichtung mittels eines Positionierungssystems an die Position gebracht, an der der Sitz eingebaut werden soll. Damit wird das aufwändige Markieren der Sitzschiene obsolet. Somit werden viele Quellen eliminiert und der Prozessschritt der Sitzpositionierung wird beschleunigt.

Mittels der Sitztransporteinrichtung wird der Sitz vorzugsweise vom Hersteller bis in das Luftfahrzeug, beispielsweise bis in eine Flugzeugkabine hinein, gebracht und mit der Sitzeinbaueinrichtung verbunden. Dabei ist keine schwere körperliche Arbeit mehr nötig, das Verletzungs- und Beschädigungsrisiko sinkt.

Vorzugsweise wird der Sitz nun von der Transporteinrichtung in die Einbaueinrichtung transportiert, und die Transporteinrichtung kann entfernt werden. Die Einbaueinrichtung senkt vorzugsweise den Sitz in die Sitzschiene ab, wobei vorzugsweise alle vier Sitzfüße fixiert werden, um ein Verkanten der Sitzfüße in der Sitzschiene zu verhindern. Vorzugsweise wird abschließend der Sitz um einen halben Zoll in x-Richtung mittels der Einbaueinrichtung verschoben. Auch hier sind keine schwere körperlichen Arbeiten mehr nötig.

Vorteilhafte Ausgestaltungen sind Gegenstand der Unteransprüche.

Im Folgenden wird die Erfindung anhand der beigefügten Zeichnungen näher erläutert. Dabei zeigen:
- Fig. 1: eine erste perspektivische Ansicht einer Sitzeinbaueinrichtung;
- Fig. 2: eine zweite perspektivische Ansicht einer Sitzeinbaueinrichtung;
- Fig. 3: eine Draufsicht auf die Sitzeinbaueinrichtung;
- Fig. 4: eine Detailansicht der Sitzeinbaueinrichtung mit einer Positioniereinrichtung und einer Sitzerfassungs- und Halteeinrichtung;
- Fig. 5: eine erste perspektivische Ansicht einer Sitztransporteinrichtung;
- Fig. 6: eine zweite perspektivische Ansicht einer Sitztransporteinrichtung;
- Fig. 7: eine Draufsicht der Sitztransporteinrichtung;
- Fig. 8: eine schematische Darstellung eines ersten Verfahrensschritts zur Sitzmontage;
- Fig. 9: eine erste perpektivische schematische Darstellung eines zweiten Verfahrensschritts zur Sitzmontage;
- Fig. 10: eine zweite perspektivische Darstellung des zweiten Verfahrensschritts;
- Fig. 11: eine erste schematische Darstellung eines dritten Verfahrensschritts zur Sitzmontage;
- Fig. 12: eine zweite schematische Darstellung des dritten Verfahrensschritts;
- Fig. 13: eine schematische Darstellung eines vierten Verfahrensschritts zur Sitzmontage;
- Fig. 14: eine Detaildarstellung des vierten Verfahrensschritts;
- Fig. 15: eine erste schematische Darstellung eines fünften Verfahrensschritts zur Sitzmontage;
- Fig. 16: eine zweite schematische Darstellung des fünften Verfahrensschritts;
- Fig. 17: eine schematische Darstellung eines sechsten Verfahrensschritts zur Sitzmontage;
- Fig. 18: eine schematische Übersichtsdarstellung zur Erläuterung des Konzepts der Sitzmontage; und
- Fig. 19: ein Flussdiagramm zur Übersichtsdarstellung einer Ausführungsform des Sitzmontageverfahrens.

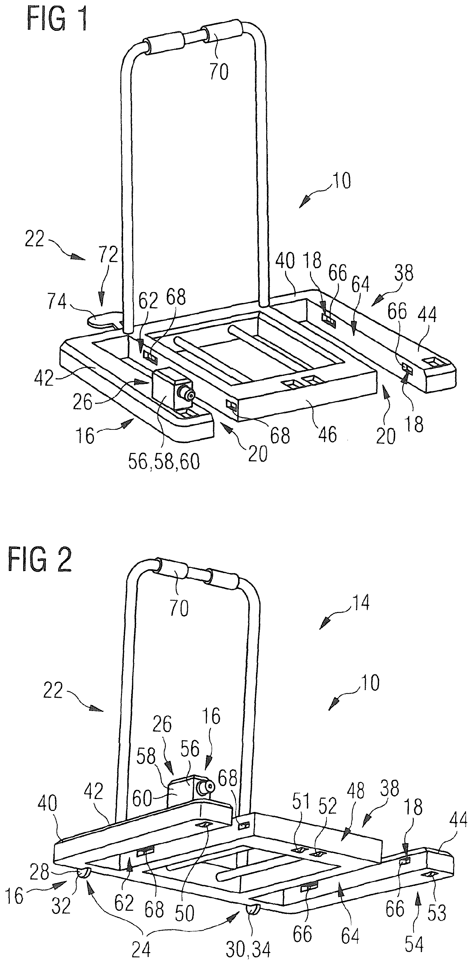

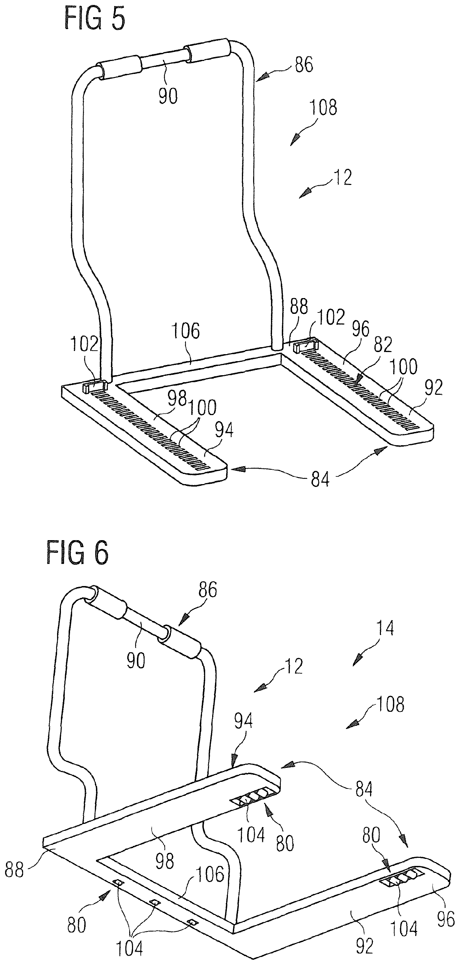

In den Fig. 1 bis 4 ist eine Ausführungsform einer Sitzeinbaueinrichtung 10 gezeigt, während in den Fig. 5 bis 7 eine Ausführungsform einer Sitztransporteinrichtung 12 dargestellt ist. Durch die Kombination aus Sitzeinbaueinrichtung 10 und Sitztransporteinrichtung 12 ist eine Sitzmontagevorrichtung 14 zur Montage wenigstens eines Sitzes in ein Luftfahrzeug gebildet.

Im Folgenden wird zunächst die Sitzeinbaueinrichtung 10 anhand der Darstellung in den Fig. 1 bis 4 näher erläutert.

Die Sitzeinbaueinrichtung 10 weist ein Positioniersystem 16 zur Positionierung der Sitzeinbaueinrichtung 10 an der gewünschten Montagestelle, eine Sitzerfassungs- und Halteeinrichtung 18 zum Erfassen des Sitzes und zum Halten des Sitzes zwecks Montage, eine erste Kopplungseinrichtung 20 zum Koppeln mit der Sitztransporteinrichtung 12 für die Übergabe des Sitzes und eine erste Handhabungseinrichtung 22 zur Habhabung und/oder Bedienung der Sitztransporteinrichtung 12 durch eine Bedienperson auf.

Das Positioniersystem 16 weist eine erste Positioniereinrichtung 24 zum Positionieren der Sitzeinbaueinrichtung 10 quer zur Erstreckungsrichtung einer Sitzschiene und eine zweite Positioniereinrichtung 26 zum Positionieren der Sitzeinbaueinrichtung entlang der Längsrichtung der Sitzschiene auf.

Die erste Positioniereinrichtung 24 weist einen ersten Eingriffsvorsprung 28 zum Eingreifen in eine erste Sitzschiene und einen zweiten Eingriffsvorsprung 30 zum Eingreifen in eine zweite Sitzschiene auf.

Die beiden Eingriffsvorsprünge 28, 30 weisen jeweils wenigstens eine drehend gelagerte Rolle 32, 34 an einem hinteren Kantenbereich 36 eines Basisteils 38 der Sitzeinbaueinrichtung 10 auf.

Das Basisteil 38 weist einen U-förmigen Grundrahmen 40 mit zwei seitlichen Schenkeln 42, 44 und einen inneren Stabilisierungsrahmen 46 auf.

An einem vorderen Bereich 48 des Basisteils 38 sind weitere Rollen 50, 51, 52 und 53 vorgesehen, die zusammen mit der ersten Rolle 32 und der zweiten Rolle 34 eine Verfahreinrichtung 54 zum Verfahren der Sitzeinbaueinrichtung 10 über den Boden bilden.

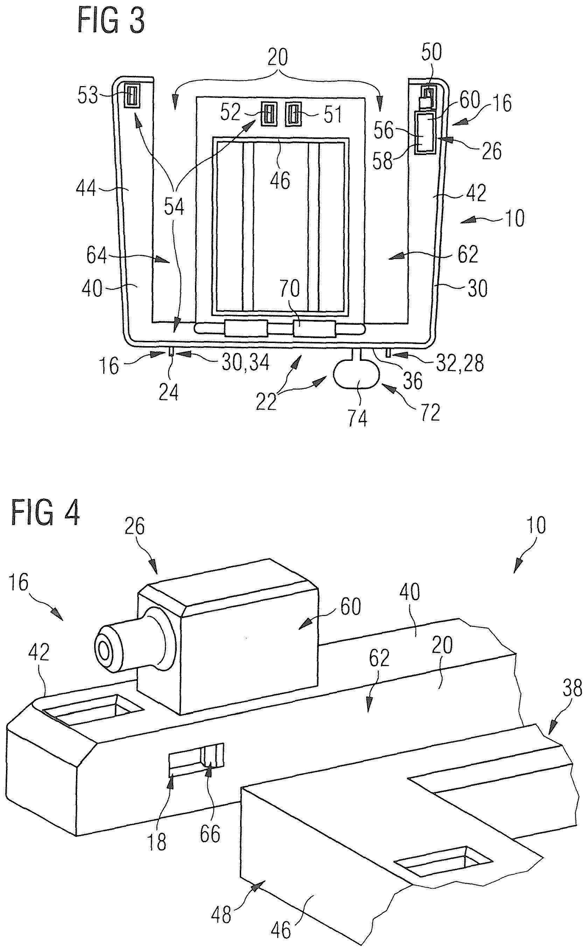

Die zweite Positioniereinrichtung 26 weist eine optische Messeinrichtung 56 mit einem Messgerät 58 zum Erfassen einer Entfernung zu einem Referenzpunkt auf. Die Messeinrichtung 56 mit dem optischen Messgerät 58 ist näher in Fig. 4 dargestellt. Wie aus Fig. 4 ersichtlich, ist auf wenigstens einem der beiden Schenkel 42, 44 ein Laser 60 zur Entfernungsmessung vorgesehen.

Die erste Kopplungseinrichtung 20 weist eine erste Aufnahme 62 zwischen einem ersten Schenkel 42 und dem Stabilisierungsrahmen 46 und eine zweite Aufnahme 64 zwischen dem zweiten Schenkel 44 und dem Grundrahmen 40 auf. Die beiden Aufnahmen 62, 64 dienen zur formschlüssigen Aufnahme von zwei komplementär ausgebildeten Positioniervorsprüngen der Sitztransporteinrichtung 12, die hiernach noch näher beschrieben werden.

Die Sitzerfassungs- und Halteeinrichtung 18 weist mehrere Paare von Spannbacken 66, 68 zum Erfassen von Sitzfüßen auf. Die Spannbacken 66, 68 sind an jeweils gegenüberliegenden Stellen innerhalb der Aufnahmen 62, 64 in den Schenkeln 42, 44 und dem Stabilisierungsrahmen 46 untergebracht.

Die erste Handhabungseinrichtung 22 weist einen Griff 70 zum Erfassen, Halten und Bewegen der Sitzeinbaueinrichtung 10 und eine Betätigungseinrichtung 72 zum Betätigen der Sitzerfassungs- und Halteeinrichtung 18 auf. Die Betätigungseinrichtung 72 weist beispielsweise ein Fußpedal 74 zum beispielsweise hydraulischen oder pneumatischen Bewegen der Spannbacken 66, 68 auf. Mittels des Fußpedals 74 lassen sich die Spannbacken 66, 68 insbesondere hydraulisch oder pneumatisch betätigt aufeinander zu bewegen, um Sitzfüße zwischen sich einzuspannen. Mittels einer nicht näher dargestellten Entlastungseinrichtung lässt sich der Druck, z.B. Hydraulikdruck oder Pneumatikdruck, auf die Spannbacken 66, 68 wieder lösen, so dass die Spannbacken 66, 68, die in ihre in den Fig. 1 bis 4 dargestellte zurückgezogene Position vorgespannt sind, wieder zurückbewegen. Dadurch lassen sich die Sitzfüße wieder lösen.

Im Folgenden wird die Sitztransporteinrichtung 12 anhand der Darstellung in den Fig. 5 bis 7 näher erläutert.

Die Sitztransporteinrichtung 12 weist eine Fahreinrichtung 80 zum Verfahren der Sitztransporteinrichtung 12 über den Boden; eine Sitzstützeinrichtung 82 zum Stützen und Halten der Sitze; eine zweite Kopplungseinrichtung 84 zum Koppeln der Sitztransporteinrichtung 12 mit der Sitzeinbaueinrichtung 10 und eine zweite Handhabungseinrichtung 86 zum Handhaben der Sitztransporteinrichtung 12 durch eine Bedienperson auf.

In dem gezeigten Ausführungsbeispiel weist die Sitztransporteinrichtung 12 ein U-förmiges Rahmenteil 88 und einen Griff 90 auf, der die zweite Handhabungseinrichtung 86 bildet.

Die zweite Kopplungseinrichtung 84 ist komplementär zu der ersten Kopplungseinrichtung 20 ausgebildet, um die Sitzeinbaueinrichtung 10 und die Sitztransporteinrichtung 12 zur Übergabe von Sitzen formschlüssig zueinander zu positionieren.

Beispielsweise weist die zweite Kopplungseinrichtung 84 zwei Positioniervorsprünge 92, 94 auf, die zum formschlüssigen passenden Eingreifen in die beiden Aufnahmen 62, 64 der Sitzeinbaueinrichtung 10 ausgebildet sind. Die Positioniervorsprünge 92, 94 sind durch zwei Schenkel 96, 98 des U-förmigen Rahmenteils 88 gebildet.

Die Sitzstützeinrichtung 82 weist ein Raster von sich quer zur Errichtung der Schenkel 96, 98 erstreckenden länglichen Aufnahmevertiefungen 100 oder von Aufnahmerippen sowie Anschläge 102 auf der Oberseite der Schenkel 96, 98 auf. Die Aufnahmevertiefungen 100 dienen zur Aufnahme der Fußpunkte von Sitzgestellen unterschiedlich ausgebildeter Sitze. Die Raster der beiden Schenkeln 96, 98 weisen einen Abstand zueinander auf, der im Wesentlichen einem Abstand eines Paares von Sitzschienen in einer Passagierkabine des Luftfahrzeugs, beispielsweise Flugzeugkabine, entspricht.

Die Fahreinrichtung 80 weist mehrere Rollen 104 auf der Unterseite der Schenkel 96, 98 und auf der Unterseite eines Verbindungssteges 106 des Rahmenteils 88 auf.

Die Sitztransporteinrichtung 12 ist somit durch eine Art Wagen 108 gebildet, mit dem der Sitz bereitgestellt werden kann. Der Wagen 108 hat die Grundfunktionen, den Sitz aufzunnehmen, den Sitz zu transportieren und eine Verbindung zu der Sitzeinbaueinrichtung 10 herzustellen.

In bevorzugter Ausgestaltung hat der Wagen 108 zusätzlich noch folgende Funktionen bezüglich der Sitzaufnahme:
- Sitz auf dem Wagen fixieren
- Wagen in dem Transportbehälter, z.B. im LKW, fixieren - z.B. mittels Feststellbremse oder mittels Fixierpunkten
- Sitz beim Transport schützen - z.B. durch vorspringende Schenkel 96, 98, den Griff 90 und/oder eine nicht dargestellte Schutzhülle.

Zum Sitztransport hat der Wagen vorzugsweise noch folgende Funktionen:
- Wagen verschieben - mittels der Fahreinrichtung 80
- Wagen lenken - beispielsweise mittels lenkbarer Rollen 104
- Wagen bremsen - beispielsweise mittels nicht näher dargestellter Bremseinrichtungen/Feststellbremsen
- Status anzeigen, z.B. gebremst/ungebremst.

Bezüglich der Herstellung der Verbindung mit der Sitzeinbaueinrichtung 10 hat der Wagen 108 in bevorzugter Ausgestaltung folgende Funktionen:
- Wagen in die Sitzeinbaueinrichtung 10 einführen
- Wagen in der Sitzeinbaueinrichtung 10 fixieren
- Sitz an die Sitzeinbaueinrichtung 10 übergeben.

Die Sitzeinbaueinrichtung 10 dient zur Positionierung des Sitzes und zur Unterstützung der Sitzmontage.

Als Teilschritte zur Positionierung der Sitzeinbaueinrichtung 10 können genannt werden:
- Laser installieren
- Daten aufnehmen
- Position der Sitzeinbaueinrichtung 10 bestimmen.

Der Schritt der Installation des Lasers 60 umfasst insbesondere die Fixierung des Lasers 60 auf der Sitzeinbaueinrichtung 10 und die Herstellung einer Datenverbindung zwischen Laser und einer nicht näher dargestellten Steuervorrichtung der Sitzmontagevorrichtung 14.

Der Schritt der Datenaufnahme umfasst insbesondere das Laden eines vorbestimmten Kabinenlayouts und das Wählen der Sitzreihe des Kabinenlayouts, wo der aktuelle Sitz installiert werden soll.

Der Schritt der Bestimmung der Position der Sitzeinbaueinrichtung 10 umfasst insbesondere das Messen der Position der Sitzeinbaueinrichtung 10 mittels des Lasers 60 und das Signalisieren der aktuell gemessenen Ist-Position.

Demnach weist die Sitzeinbaueinrichtung 10 eine nicht näher dargestellte Datenverbindung zu der Steuervorrichtung auf.

Die Unterstützung der Sitzmontage mittels der Sitzeinbaueinrichtung 10 umfasst insbesondere die Schritte:
- Position einnehmen
- Verbindung mit der Sitztransporteinrichtung 12 herstellen
- Sitz positionieren.

Der Schritt "Position einnehmen" umfasst vorzugsweise folgende Unterschritte:
- Positionieren in Richtung quer zu den Längsschienen mittels der ersten Positioniereinrichtung 24
- Sitzeinbaueinrichtung 10 in x-Richtung längs zur Schiene verschieben
- Laser 60 reflektieren zur Bestimmung der x-Position
- Sitzeinbaueinrichtung 10 fixieren, beispielsweise mittels nicht näher dargestellter Klemm- oder Erfassungseinrichtungen, die die Sitzeinbaueinrichtung relativ zur Sitzschiene fixieren.

Der Schritt "Verbindung zum Wagen herstellen" umfasst insbesondere die folgenden Unterschritte:
- Wagen 108 aufnehmen
- Wagen innerhalb der Sitzeinbaueinrichtung 10 fixieren
- Sitz übernehmen.

Der Schritt "Sitz positionieren" umfasst insbesondere die folgenden Unterschritte:
- Sitz absenken
- Sitz verschieben (beispielsweise um 1/2 Zoll)
- Status anzeigen (beispielsweise über die Datenschnittstelle).

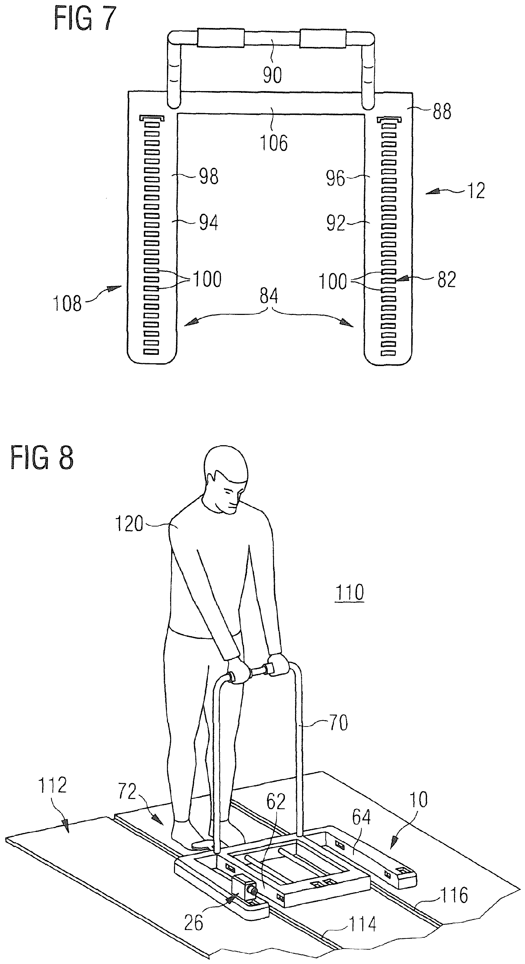

Ein Ausführungsbeispiel eines Verfahrens zur Sitzmontage wird im Folgenden anhand der Darstellungen in den Fig. 8 bis 17 näher erläutert.

Fig. 8 zeigt dabei einen ersten Schritt einer Positionierung der Sitzeinbaueinrichtung 10 innerhalb eines Luftfahrzeuges, beispielsweise innerhalb einer Flugzeugkabine 110.

Die Flugzeugkabine 110 weist einen Boden 112 mit einem Paar von Sitzschienen 114, 116 auf. Die Sitzschienen 114, 116 verlaufen parallel zueinander. Die Aufnahmen 62, 64 und die erste Rolle 32 und die zweite Rolle 34 sind entsprechend zu dem Abstand der Sitzschienen 114, 116 so ausgebildet, dass die Sitzschienen 114, 116 bei Einführen der ersten Rolle 32 in die erste Sitzschiene 114 und bei Einführen der zweiten Rolle 34 in die zweite Sitzschiene 116 mittig und parallel zu den Aufnahmen 62, 64 ausgerichtet sind. Aufgrund des Eingriffes der Rollen 32, 34 in die Sitzschienen 114, 116 lässt sich bei dieser Ausrichtung die Sitzeinbaueinrichtung 10 nur parallel zu den Sitzschienen 114, 116 bewegen. Die Rollen 32, 34 weisen hierzu einen relativ großen Durchmesser und eine derartige Dicke auf, dass sie mit geringem Spiel innerhalb von Nuten in den Sitzschienen 114, 116 aufgenommen sind, so dass sie nur in der passenden Ausrichtung zu den Sitzschienen 114, 116 in diese einführbar sind.

Eine erste Bedienperson 120 positioniert die Sitzeinbaueinrichtung 10 mit Hilfe des optischen Messgeräts 58 an der gewünschten Position. Aufgrund des Eingreifens der Rollen 32, 34 in die Sitzschienen 114, 116 liegt dabei der hintere Kantenbereich 36 auf dem Boden 112 auf, so dass die Sitzeinbaueinrichtung entsprechend durch Druck nach unten auf den Griff 70 fixierbar ist.

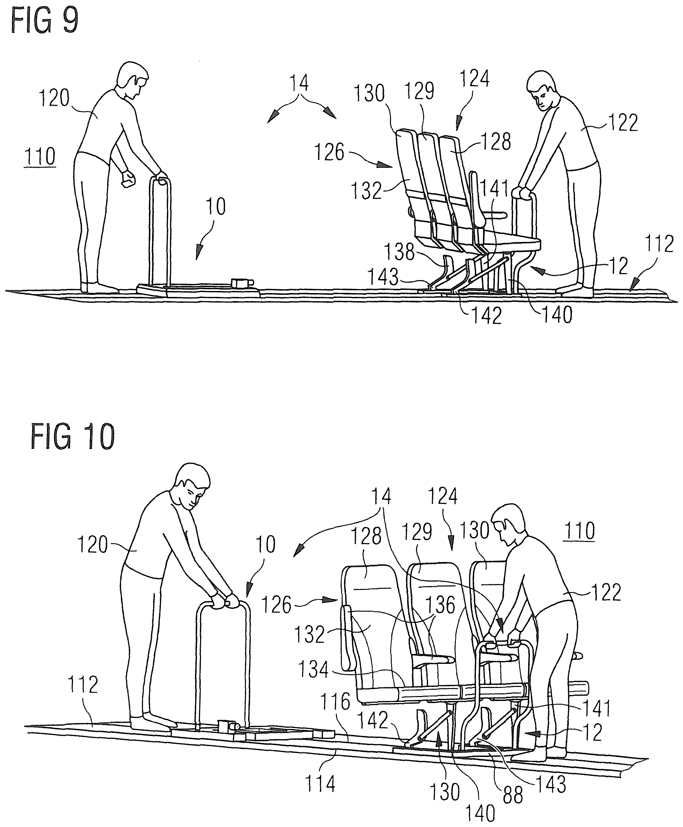

In den Fig. 9 und 10 ist ein zweiter Verfahrensschritt zur Sitzmontage dargestellt, wobei eine zweite Bedienperson 122 einen Sitz 124 mittels der Sitztransporteinrichtung 12 in die Flugzeugkabine 110 einfährt und hin zu der positionierten Sitzeinbaueinrichtung 10 verfährt. Der Sitz 124 ist als Sitzreihe 126 mit mehreren Einzelplätzen 128, 129, 130 ausgebildet, die jeweils eine Rückenlehne 132, eine Sitzfläche 134 und Armlehnen 136 aufweisen. Der Sitz 124 weist ein Sitzgestell 138 auf. Das Sitzgestell 138 weist beispielsweise vier Sitzfüße 140, 141, 142, 143 auf, wobei zwei vordere Sitzfüße 140, 141 auf der Stützeinrichtung 82 im Anschlag an den Anschlägen 102 positioniert sind und zwei hintere Sitzfüße 142, 143 in passende Aufnahmevertiefungen 100 eingreifen.

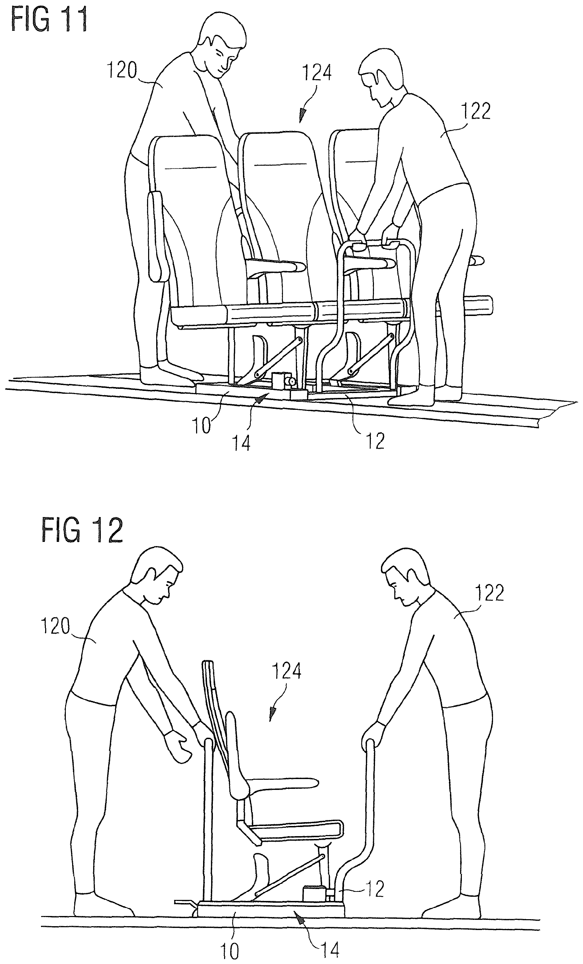

Fig. 11 zeigt einen dritten Verfahrensschritt bei der Sitzmontage, wobei die Sitztransporteinrichtung 12 und die Sitzeinbaueinrichtung 10 zueinander positioniert werden.

Hierbei schiebt die zweite Bedienperson 122 die Sitztransporteinrichtung 12 hin zu der Sitzeinbaueinrichtung 12, bis die beiden Kopplungseinrichtungen 20, 84 einander erfassen. Die Positioniervorsprünge 92, 94 werden in die Aufnahmen 62, 64 bis zum Anschlag eingeschoben. Die zweite Bedienperson 120 kontrolliert dabei die Beibehaltung der Positionierung der Sitzeinbaueinrichtung 10.

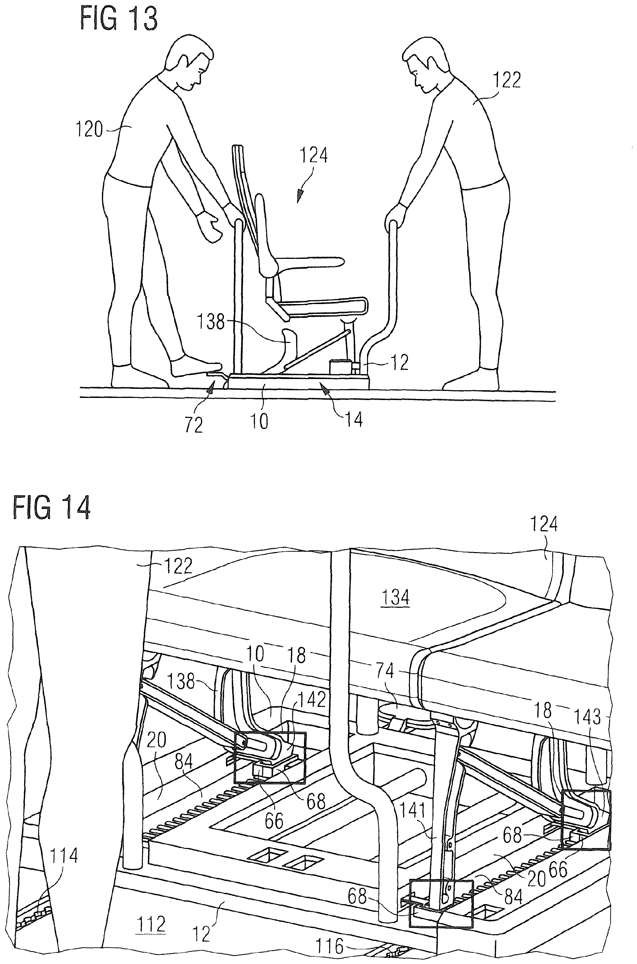

In den Fig. 4 und 5 ist ein vierter Schritt der Sitzmontage dargestellt. Dabei sind die Sitzeinbaueinrichtung 10 und die Sitztransporteinrichtung 12 zueinander fixiert, wobei sich die Sitzeinbaueinrichtung 10 an der vorbestimmten Position befindet. Die erste Bedienperson betätigt mittels der Betätigungseinrichtung 72 die Sitzerfassungs- und Halteeinrichtung 18, um den Sitz 124 zu erfassen und zu halten. Hierzu betätigt die erste Bedienperson 120 das Fußpedal 74, wodurch die vier Paare von Spannbacken 66, 68 ausfahren und die vier Sitzfüße 140, 141, 142, 143 gleichzeitig festspannen. In Fig. 14 sieht man die zwischen den Spannbacken 66, 68 festgespannten Sitzfüße 140, 141, 142 und 143.

Im Anschluss darauf zieht die zweite Bedienperson 122 die Sitztransporteinrichtung 12 aus ihrer Aufnahme in der Sitzeinbaueinrichtung 10 und entfernt die Sitztransporteinrichtung 12.

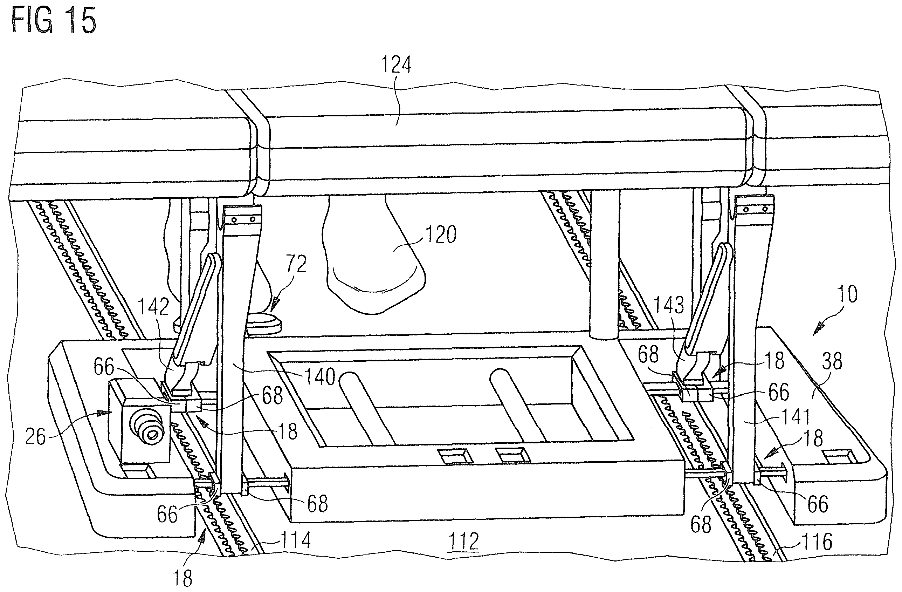

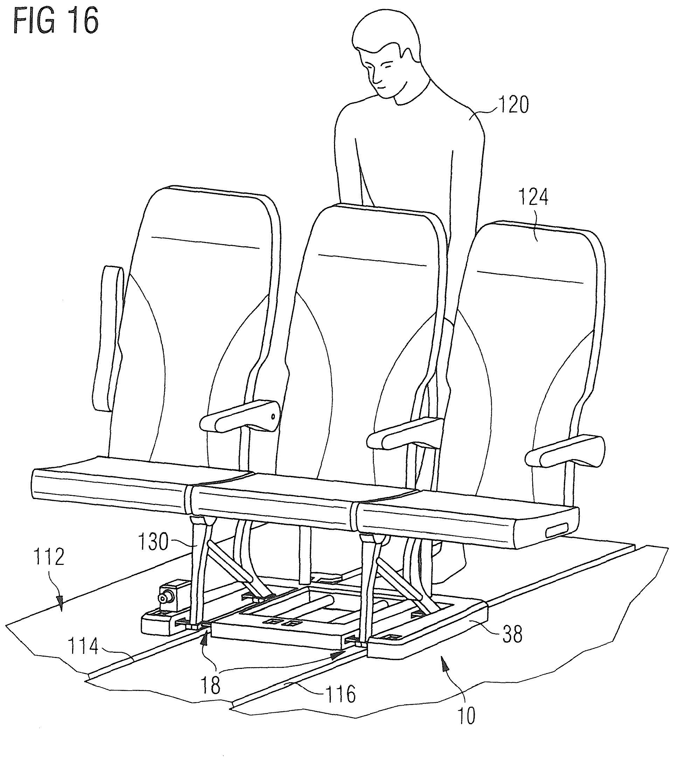

Die Fig. 15 und 16 zeigen dann die Sitzeinbaueinrichtung 10 mit in der Sitzerfassungs- und Halteeinrichtung 18 gehaltenem Sitz 124 und verdeutlichen somit den fünften Schritt der Sitzmontage, worin die Sitztransporteinrichtung 12 entfernt wird.

In dieser in den Fig. 15 und 16 gezeigten Lage betätigt die erste Bedienperson 120 die Sitzerfassungs- und Halteeinrichtung 18, um die Spannbacken zu lösen. Dadurch senkt sich der Sitz 124 ab und die Sitzfüße 140-143 greifen in die Sitzschiene ein. Anschließend wird der Sitz 124 mittels der Sitzeinbaueinrichtung 10 noch um eine bestimmte Strecke, beispielsweise 1/2 Zoll (1,27 cm) nach vorne in die endgültige Montageposition geschoben.

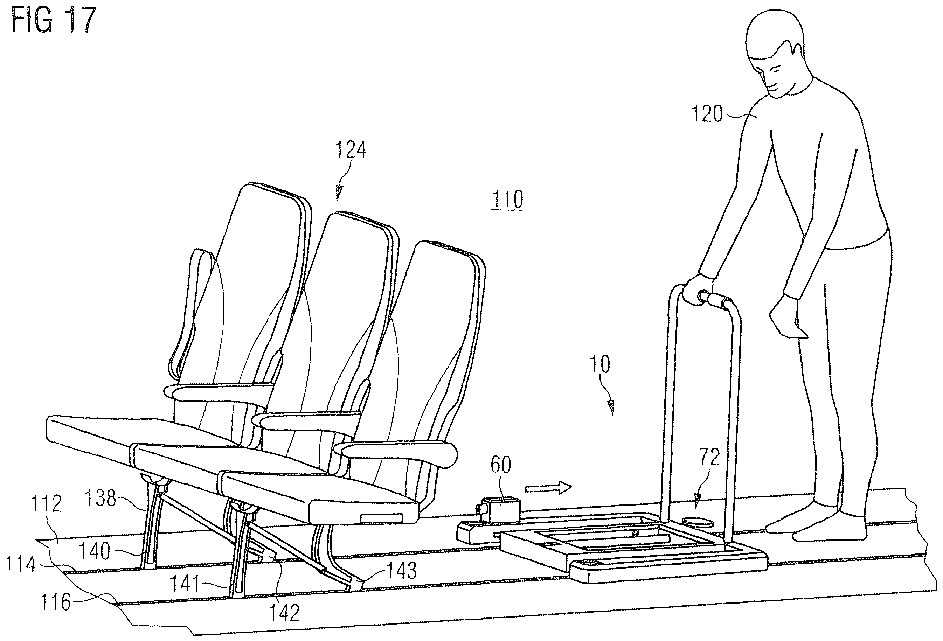

Fig. 17 zeigt den sechsten und letzten Schritt der Sitzmontage, worin die Spannbacken 66, 68 gelöst werden und die Sitzeinbaueinrichtung durch Zug nach hinten entfernt wird.

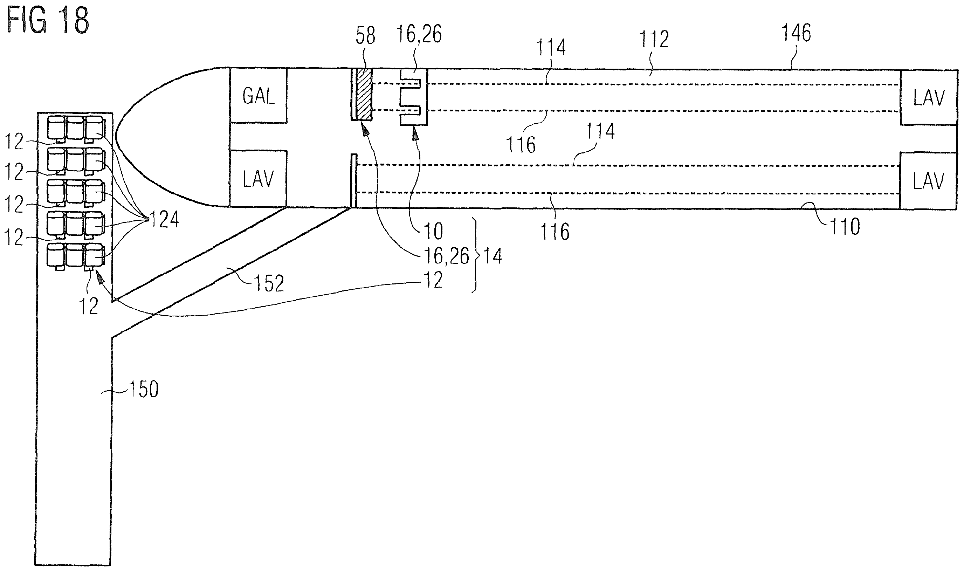

Fig. 18 zeigt eine schematische Übersicht über die Flugzeugkabine 110 während der Sitzmontage, um das Verfahren der Sitzmontage noch einmal zusammenfassend zu erläutern.

Mehrere der Sitze 124 mit entsprechenden Sitztransporteinrichtungen 12 (jeweils eine pro Sitz 124) werden durch den Sitzhersteller bis zu einer Arbeitsbühne 150 transportiert. Von der Arbeitsbühne 150 können die Sitze 124 mittels der Sitztransportvorrichtung 12 über eine Rampe 152 in das Innere der Flugzeugkabine 110 gefahren werden. Innerhalb der Flugzeugkabine 110 befinden sich zwei Paare der Sitzschienen 114, 116, wobei an einem dieser Paare von Sitzschienen 114, 116 die bereits positionierte Sitzeinbaueinrichtung 10 angedeutet ist. Die Sitzeinbaueinrichtung 10 übernimmt den Sitz 124 von der Sitztransporteinrichtung 12, positioniert den Sitz 124 entsprechend einer Kabinenlayout-Spezifikation mit dem Laser 60, senkt den Sitz an einer Zielposition in die Sitzschienen 114, 116 ab und führt eine Verschiebung um eine vorbestimmte Strecke in die endgültige Sitzposition aus.

Der Laser 60 positioniert die Sitzeinbaueinrichtung 10 inklusive dem Sitz 124 zu der Zielposition entsprechend zu der Kabinenlayout-Spezifikation. Es können mehrere Laser 60 vorgesehen sein für einen ausfallsicheren Betrieb und zum Erreichen von minimalen Toleranzen.

Die Sitztransporteinrichtung 12 dient zum Transport der Sitze 124 von dem Sitzhersteller zu dem Lager, von dem Lager zu der Arbeitsbühne 150 und von der Arbeitsbühne 150 in die Flugzeugkabine 110. Sie liefert den Sitz 124 zu der Sitzeinbaueinrichtung 10, ohne den Sitz 124 anzuheben.

Da die Sitztransporteinrichtung 12 nur Transportaufgaben und keine Hebe- oder Montagefunktionen erfüllt, kann die Sitztransporteinrichtung 12 einfach und kostengünstig aufgebaut werden. Es können somit in kostengünstiger Weise eine Vielzahl von Sitztransporteinrichtungen 12 eingesetzt werden, die alle mit einer einzelnen Sitzeinbaueinrichtung 10 zusammenarbeiten. Die Sitzeinbaueinrichtung 10 kann dementsprechend teurer und aufwändiger aufgebaut werden, wobei neben den Sitzübernahme- und Montagefunktionen auch Positionieraufgaben sowie Datenübertragungsfunktionen erfüllt werden können.

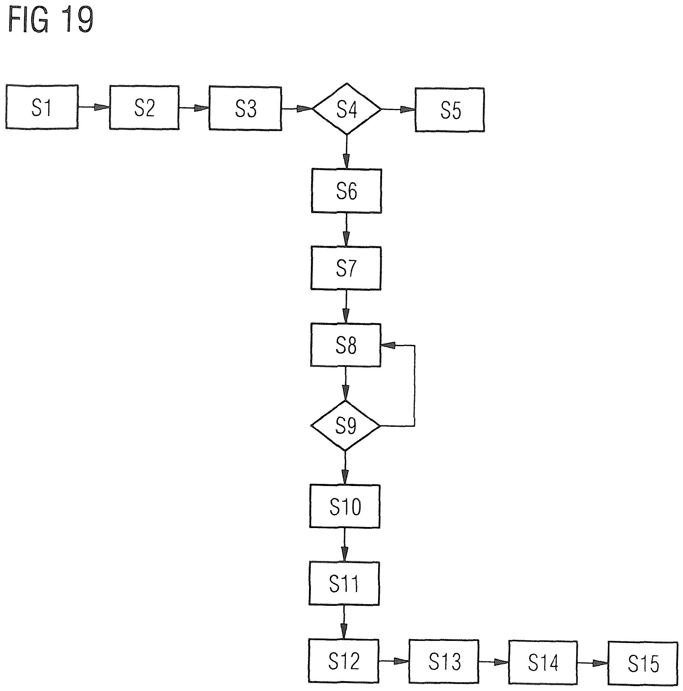

Fig. 19 zeigt eine Ausführungsform anhand eines Flussdiagramms, das anhand der folgenden Legende selbsterklärend ist:

### Legende:

In dem Flussdiagramm von Fig. 19 bezeichnen die einzelnen Schritte:
- S1: Beauftragung Sitze
- S2: Herstellung Sitze
- S3: Anlieferung Sitze
- S4: Abfrage Lager oder Dock
- S5: Lager
- S6: Bereitstellung Sitz (Sitzreihe) am Dock
- S7: Sitzeinbaueinrichtung in erster Position justieren
- S8: Sitz (Sitzreihe) vom Dock in Sitzeinbaueinrichtung einführen
- S9: Abfrage: Richtige Position?
- S10: Sitztransporteinrichtung entfernen
- S11: Sitzfüße in Sitzschienen einführen
- S12: Sitzfüße um 0,5 Zoll verschieben in der Sitzeinbaueinrichtung
- S13: Sitzeinbaueinrichtung entfernen
- S14: Sitz (Sitzreihe) in der Sitzschiene befestigen
- S15: Sitzeinbaueinrichtung in nächster Einbauposition justieren

Nach Schritt S15 geht es erneut mit Schritt S8 weiter, bis alle Sitze (Sitzreihen) eingebaut sind.

Vorteile des Sitzmontageverfahrens sind eine verbesserte Arbeitssicherheit, eine sichere Verfahrensstabilität und Zuverlässigkeit, eine sichere Stellung eines in sich konsistenten Prozesses zwischen den einzelnen Plattformen; eine Reduzierung von verbrauchten Ressourcen und eine Reduzierung der für die Installation benötigten Arbeitszeiten.

Zur Optimierung des Verfahrens sind die Erzeugung von Datenbanken und Katalogen für Sitze, Sitzgestelle, Befestigungen und unteren Sitzrahmen sowie Sitzschienengestaltungen vorteilhaft.

Die Sitzanordnungslayouts können analysiert und maschinenlesbar zur Verfügung gestellt werden.

Zur Optimierung der Sitztransporteinrichtung ist eine detaillierte Analyse der Lieferkette für die Sitze vorteilhaft.

Die Positionierung, Übergabe und Montage mittels der Sitzeinbaueinrichtung 10 lässt sich über eine Analyse des Sitzinstallationsprozesses optimieren.

Die dargestellte Sitzeinbaueinrichtung 10 und die Sitzmontagevorrichtung 14 ermöglichen weiter eine vorteilhafte Kombination der optischen Messeinrichtung 56 mit Sitzschienen-Referenzmarken. Dadurch lassen sich Kabinenräume und Installationsprozesse virtuell darstellen, um neue Werkzeuge für die Planung und die Simulation zur Verfügung zu stellen.

Eine weitere mögliche Verwendung der Sitzeinbaueinrichtung 10 ist die Möglichkeit einer schnellen Änderung des Sitzkabinenlayouts, beispielsweise im Zuge von Wartungen oder Umbauten.

### Bezugszeichenliste:

- 10: Sitzeinbaueinrichtung
- 12: Sitztransporteinrichtung
- 14: Sitzmontagevorrichtung
- 16: Positioniersystem
- 18: Sitzerfassungs- und Halteeinrichtung
- 20: erste Kopplungseinrichtung
- 22: erste Handhabungseinrichtung
- 24: erste Positioniereinrichtung
- 26: zweite Positioniereinrichtung
- 28: erster Eingriffsvorsprung
- 30: zweiter Eingriffsvorsprung
- 32: erste Rolle
- 34: zweite Rolle
- 36: hinterer Kantenbereich
- 38: Basisteils
- 40: Grundrahmen
- 42: Schenkel
- 44: Schenkel
- 46: Stabilisierungsrahmen
- 48: vorderer Bereich
- 50: dritte Rolle
- 51: vierte Rolle
- 52: fünfte Rolle
- 53: sechste Rolle
- 54: Verfahreinrichtung
- 56: optische Messeinrichtung
- 58: Messgerät
- 60: Laser
- 62: Aufnahme
- 64: Aufnahme
- 66: Spannbacke
- 68: Spannbacke
- 70: Griff
- 72: Betätigungseinrichtung
- 74: Fusspedal
- 80: Fahreinrichtung
- 82: Sitzstützeinrichtung
- 84: zweite Kopplungseinrichtung
- 86: zweite Handhabungseinrichtung
- 88: Rahmenteil
- 90: Griff
- 92: Positioniervorsprung
- 94: Positioniervorsprung
- 96: Schenkel
- 98: Schenkel
- 100: Aufnahmevertiefungen
- 102: Anschläge
- 104: Rollen
- 106: Verbindungssteg
- 108: Wagen
- 110: Flugzeugkabine
- 112: Boden
- 114: Sitzschiene
- 116: Sitzschiene
- 120: erste Bedienperson
- 122: zweite Bedienperson
- 124: Sitz
- 126: Sitzreihe
- 128: Einzelplatz
- 129: Einzelplatz
- 130: Einzelplatz
- 132: Rückenlehne
- 134: Sitzfläche
- 136: Armlehne
- 138: Sitzgestell
- 140: vorderer Sitzfuß
- 141: vorderer Sitzfuß
- 142: hinterer Sitzfuß
- 143: hinterer Sitzfuß
- 146: Luftfahrzeug
- 150: Arbeitsbühne
- 152: Rampe
- S1: Beauftragung Sitze
- S2: Herstellung Sitze
- S3: Anlieferung Sitze
- S4: Abfrage Lager oder Dock
- S5: Lager
- S6: Bereitstellung Sitz (Sitzreihe) am Dock
- S7: Sitzeinbaueinrichtung in erster Position justieren
- S8: Sitz (Sitzreihe) vom Dock in Sitzeinbaueinrichtung einführen
- S9: Abfrage: Richtige Position?
- S10: Sitztransporteinrichtung entfernen
- S11: Sitzfüße in Sitzschienen einführen
- S12: Sitzfüße um 0,5 Zoll verschieben in der Sitzeinbaueinrichtung
- S13: Sitzeinbaueinrichtung entfernen
- S14: Sitz (Sitzreihe) in der Sitzschiene befestigen
- S 15: Sitzeinbaueinrichtung in nächster Einbauposition justieren

## Patentansprüche

1. Sitzmontageverfahren zur Montage wenigstens eines Sitzes (124) in ein Luftfahrzeug (146) mit den Schritten:
a) Positionieren einer im Luftfahrzeug (146) bewegbaren Sitzeinbaueinrichtung (10) zur Positionierung und zur Montage des Sitzes (124) an einer vorgegebenen Montageposition im Luftfahrzeug (146),
b) Transport des wenigstens einen Sitzes (124) mittels einer Sitztransporteinrichtung (12) ins Innere des Luftfahrzeuges (146) zu der Sitzeinbaueinrichtung (10),
c) Übergabe des Sitzes (124) von der Sitztransporteinrichtung (12) an die Sitzeinbaueinrichtung (10),
d) Einbau des Sitzes (124) mittels der an der Montageposition positionierten Sitzeinbaueinrichtung (10).

2. Sitzmontageverfahren nach Anspruch 1,
**dadurch gekennzeichnet,**
**dass** Schritt d) folgende mittels der Sitzeinbaueinrichtung (10) durchzuführende Schritte enthält:
d1) Absenken des Sitzes (124) in eine am Luftfahrzeug (146) angeordnete Sitzschiene (114, 116),
d2) Verschieben des Sitzes (124) an die gewünschte Sitzposition.

3. Sitzmontageverfahren nach einem der voranstehenden Ansprüche, **dadurch gekennzeichnet,**
**dass** Schritt b) umfasst:
b1) Transportieren des wenigstens eines Sitzes (124) von einem Sitzlieferanten bis zu der Sitzeinbaueinrichtung (10).

4. Sitzmontageverfahren nach einem der voranstehenden Ansprüche,
**dadurch gekennzeichnet,**
**dass** Schritt a) umfasst:
a1) Positionieren der Sitzeinbaueinrichtung (10) in einer quer zur Sitzschiene (114, 116) verlaufenden Richtung anhand der Sitzschiene (114, 116) und
a2) Positionieren der Sitzeinbaueinrichtung (10) in Längsrichtung der Sitzschiene (114, 116) mittels eines optischen Entfernungsmessgeräts (56).

5. Sitzmontageverfahren nach einem der voranstehenden Ansprüche,
**dadurch gekennzeichnet,**
**dass** Schritt c) umfasst:
c1) Einfahren der Sitztransporteinrichtung (12) in einen Formschluss mit der positionierten Sitzeinbaueinrichtung (10);
c2) Ergreifen und Halten des Sitzes (124) mittels einer an der Sitzeinbaueinrichtung (10) angebrachten Sitzerfassungs- und Halteeinrichtung (18); und
c3) Entfernen der Sitztransporteinrichtung (12).

6. Sitzmontageverfahren nach Anspruch 5,
**gekennzeichnet durch** den nach Schritt d) erfolgenden Schritt:
e) Lösen der Sitzerfassungs- und Halteeinrichtung (18) und Entfernen der Sitzeinbaueinrichtung (10).

7. Sitzmontagevorrichtung (14) zur Montage wenigstens eines Sitzes (124) in einem Luftfahrzeug (146) mit:
einer Sitzeinbaueinrichtung (10) zum Positionieren und Einbauen des Sitzes (124) an der gewünschten Montageposition und
einer Sitztransporteinrichtung (12) zum Transportieren des Sitzes (124) von einem Sitzlieferanten bis zur gewünschten Montageposition,
wobei die Sitzeinbaueinrichtung (10) und die Sitztransporteinrichtung (12) zueinander komplementäre Kopplungseinrichtungen (20; 84) aufweisen, mittels denen die beiden Einrichtungen (10, 12) formschlüssig erfassend ineinander eingreifen können, um den Sitz (124) von der Sitztransporteinrichtung (12) zu der an der Montageposition ausgerichteten Sitzeinbaueinrichtung (10) zu übergeben.

8. Sitzmontagevorrichtung (14) nach Anspruch 7,
**dadurch gekennzeichnet,**
**dass** die Sitzeinbaueinrichtung (10) eine erste Positioniereinrichtung (24) zum Positionieren der Sitzeinbaueinrichtung (10) in einer Richtung quer zu einer Sitzschiene (114, 116) des Luftfahrzeuges (146) und eine zweite Positioniereinrichtung (26) zum Positionieren der Sitzeinbaueinrichtung (10) in einer Längsrichtung der Sitzschiene (114, 116) aufweist.

9. Sitzmontagevorrichtung (14) nach Anspruch 8,
**dadurch gekennzeichnet**,
aa) dass die erste Positioniereinrichtung (24) einen Eingriffsvorsprung (28, 30) zum positionierenden Eingreifen in die Sitzschiene (114, 116) aufweist und/oder
bb) dass die zweite Positioniereinrichtung (26) eine optische Messeinrichtung (58) zum Messen einer Entfernung entlang der Sitzschiene (114, 116) aufweist.

10. Sitzmontagevorrichtung (14) nach einem der Ansprüche 7 bis 9,
**dadurch gekennzeichnet,**
**dass** die Sitzeinbaueinrichtung (10) eine Sitzerfassungs- und Halteeinrichtung (18) zum Erfassen des mittels der Sitztransporteinrichtung (12) zu der Montageposition transportierten Sitzes (124) aufweist.

11. Sitzmontagevorrichtung (14) nach Anspruch 10,
**dadurch gekennzeichnet,**
**dass** die Sitzerfassungs- und Halteeinrichtung (18) mehrere Paare Spannbacken (66, 68) umfasst, die durch eine Bedienperson (120) betätigt je einen Sitzfuss (140, 141, 142, 143) des Sitzes (124) erfassen und festhalten können.

12. Sitzmontagevorrichtung (14) nach einem der Ansprüche 7 bis 11,
**dadurch gekennzeichnet,**
**dass** die Sitzeinbaueinrichtung (10) zum Absenken des Sitzes (124) bis zum Eingriff in eine Sitzschiene (114, 116) des Luftfahrzeuges (146) und zum Verschieben des Sitzes (124) innerhalb der Sitzschiene (114, 116) ausgebildet ist.

13. Sitzeinbaueinrichtung (10) zum Einbauen eines Sitzes (124) in ein Luftfahrzeug (146), wobei die Sitzeinbaueinrichtung (10) zur Verwendung in der Sitzmontagevorrichtung (14) nach einem der Ansprüche 7 bis 12 und/oder in einem Sitzmontageverfahren nach einem der Ansprüche 1 bis 6 ausgebildet ist.

14. Sitztransporteinrichtung (12) zum Transportieren wenigstens eines Sitzes (124) für ein Luftfahrzeug (146) von einem Sitzhersteller bis in das Luftfahrzeug hinein, wobei die Sitztransporteinrichtung (12) zur Verwendung in der Sitzmontagevorrichtung (14) nach einem der Ansprüche 7 bis 12 und/oder in einem Sitzmontageverfahren nach einem der Ansprüche 1 bis 6 ausgebildet ist.

## Claims

1. A seat assembling method for assembling at least one seat (124) into an airplane (146), said method having the following steps:
a) position a moveable seat installing device (10) in the airplane (146) for positioning and assembling of the seat (124) at a predetermined assembly position in the airplane (146),
b) convey the at least one seat (124) into the interior of the airplane (146) to the seat installing device (10) by means of a seat conveying device (12),
c) transfer the seat (124) from the seat conveying device (12) to the seat installing device (10),
d) install the seat (124) by means of the seat installing device (10) which is positioned at the assembly position.

2. The seat assembling method as claimed in claim 1, **characterized in that** step d) includes the following steps which are to be carried out by means of the seat installing device (10):
d1) lower the seat (124) into a seat rail (114, 116) which is arranged on the airplane (146),
d2) move the seat (124) to the desired seat position.

3. The seat assembling method as claimed in one of the preceding claims, **characterized in that** step b) includes:
b1) convey the at least one seat (124) from a seat supplier to the seat installing device (10).

4. The seat assembling method as claimed in one of the preceding claims, **characterized in that** step a) includes:
a1) position the seat installing device (10) by way of the seat rail (114, 116) in a direction extending transversely with respect to the seat rail (114, 116) and
a2) position the seat installing device (10) in the longitudinal direction of the seat rail (114, 116) by means of an optical distance measuring instrument (56).

5. The seat assembling method as claimed in one of the preceding claims, **characterized in that** step c) includes:
c1) move the seat conveying device (12) into positive locking with the positioned seat installing device (10);
c2) grip and hold the seat (124) by means of a seat gripping and holding device (18) which is mounted on the seat installing device (10); and
c3) remove the seat conveying device (12).

6. The seat assembling method as claimed in claim 5, **characterized by** the step which is effected after step d):
e) release the seat gripping and holding device (18) and remove the seat installing device (10).

7. A seat assembling device (14) for assembling at least one seat (124) in an airplane (146), said seat assembling device having:
a seat installing device (10) for positioning and installing the seat (124) at the desired assembly position and
a seat conveying device (12) for conveying the seat (124) from a seat supplier to the desired assembly position,
wherein the seat installing device (10) and the seat conveying device (12) have coupling devices (20; 84) which are complementary to one another, by means of which the two devices (10, 12) are able to interlock in a gripping positive locking manner in order to transfer the seat (124) from the seat conveying device (12) to the seat installing device (10) which is aligned at the assembly position.

8. The seat assembling device (14) as claimed in claim 7, **characterized in that** the seat installing device (10) has a first positioning device (24) for positioning the seat installing device (10) in a direction transversely with respect to a seat rail (114, 116) of the airplane (146) and a second positioning device (26) for positioning the seat installing device (10) in a longitudinal direction of the seat rail (114, 116).

9. The seat assembling device (14) as claimed in claim 8, **characterized in that**
aa) the first positioning device (24) has an engagement projection (28, 30) for engaging in the seat rail (114, 116) in a positioning manner and/or
bb) **in that** the second positioning device (26) has an optical measuring device (58) for measuring a distance along the seat rail (114, 116).

10. The seat assembling device (14) as claimed in one of claims 7 to 9, **characterized in that** the seat installing device (10) has a seat gripping and holding device (18) for gripping the seat (124) which is conveyed to the assembly position by means of the seat conveying device (12).

11. The seat assembling device (14) as claimed in claim 10, **characterized in that** the seat gripping and holding device (18) includes several pairs of clamping jaws (66, 68) which, when actuated by an operator (120) are able to grip and hold on to one seat foot (140, 141, 142, 143) of the seat (124) each.

12. The seat assembling device (14) as claimed in one of claims 7 to 11, **characterized in that** the seat installing device (10) is realized for lowering the seat (124) until it engages in a seat rail (114, 116) of the airplane (146) and for moving the seat (124) inside the seat rail (114, 116).

13. A seat installing device (10) for installing a seat (124) into an airplane (146), wherein the seat installing device (10) is realized for use in the seat assembling device (14) as claimed in one of claims 7 to 12 and/or in a seat assembling method as claimed in one of claims 1 to 6.

14. A seat conveying device (12) for conveying at least one seat (124) for an airplane (146) from a seat manufacturer right into the airplane, wherein the seat conveying device (12) is realized for use in the seat assembling device (14) as claimed in one of claims 7 to 12 and/or in a seat assembling method as claimed in one of claims 1 to 6.

## Revendications

1. Procédé de montage de siège pour monter au moins un siège (124) dans un aéronef (146), comprenant les étapes consistant à :
a) positionner un dispositif d'insertion de siège (10) mobile dans l'aéronef (146) et destiné à positionner et à monter le siège (124) dans une position de montage prédéterminée dans l'aéronef (146),
b) transporter ledit au moins un siège (124) à l'intérieur de l'aéronef (146) vers le dispositif d'insertion de siège (10) au moyen d'un dispositif de transport de siège (12),
c) remettre le siège (124) du dispositif de transport de siège (12) au dispositif d'insertion de siège (10),
d) insérer le siège (124) au moyen du dispositif d'insertion de siège (10) positionné dans la position de montage.

2. Procédé de montage de siège selon la revendication 1,
**caractérisé en ce que**
l'étape d) comprend les étapes suivantes à réaliser au moyen du dispositif d'insertion de siège (10) :
d1) abaisser le siège (124) dans un rail à siège (114, 116) agencé dans l'aéronef (146),
d2) déplacer le siège (124) jusque dans la position désirée.

3. Procédé de montage de siège selon l'une des revendications précédentes,
**caractérisé en ce que**
l'étape b) consiste à :
b1) transporter ledit au moins un siège (124) depuis le fournisseur de sièges jusqu'au dispositif d'insertion de siège (10).

4. Procédé de montage de siège selon l'une des revendications précédentes,
**caractérisé en ce que**
l'étape a) consiste à :
a1) positionner le dispositif d'insertion de siège (10) à l'aide du rail à siège (114, 116) dans une direction transversale au rail à siège (114, 116), et
a2) positionner le dispositif d'insertion de siège (10) dans une direction longitudinale du rail à siège (114, 116) au moyen d'un appareil optique de mesure de distance (56).

5. Procédé de montage de siège selon l'une des revendications précédentes,
**caractérisé en ce que**
l'étape c) consiste à :
c1) engager le dispositif de transport de siège (12) en coopération de formes avec le dispositif d'insertion de siège (10) positionné ;
c2) saisir et retenir le siège (124) au moyen d'un organe de saisie et de retenue de siège (18) agencé sur le dispositif d'insertion de siège (10) ; et
c3) enlever le dispositif de transport de siège (12).

6. Procédé de montage de siège selon la revendication 5,
**caractérisé par** l'étape suivant l'étape d) et consistant à :
e) désolidariser le dispositif de saisie et de retenue de siège (18) et enlever le dispositif d'insertion de siège (10).

7. Dispositif de montage de siège (14) pour monter au moins un siège (124) dans un aéronef (146), comportant :
un dispositif d'insertion de siège (10) pour positionner et insérer le siège (124) dans la position de montage désirée, et
un dispositif de transport de siège (12) pour transporter le siège (124) depuis un fournisseur de sièges jusque dans la position de montage désirée,
le dispositif d'insertion de siège (10) et le dispositif de transport de siège (12) présentant des organes de couplage (20 ; 84) complémentaires l'un par rapport à l'autre au moyen desquels les deux dispositifs (10, 12) peuvent s'engager mutuellement en se saisissant par coopération de formes, afin de remettre le siège (124) du dispositif de transport de siège (12) au dispositif d'insertion de siège (10) aligné dans la position de montage.

8. Dispositif de montage de siège (14) selon la revendication 7,
**caractérisé en ce que**
le dispositif d'insertion de siège (10) comprend un premier dispositif de positionnement (24) pour positionner le dispositif d'insertion de siège (10) dans une direction transversale à un rail à siège (114, 116) de l'aéronef (146) et un second dispositif de positionnement (26) pour positionner le dispositif d'insertion de siège (10) dans une direction longitudinale du rail à siège (114, 116).

9. Dispositif de montage de siège (14) selon la revendication 8,
**caractérisé en ce que**
aa) le premier dispositif de positionnement (24) présente une saillie d'engagement (28, 30) pour s'engager avec positionnement dans le rail à siège (114, 116), et/ou
bb) le second dispositif de positionnement (26) présente un organe de mesure optique (58) pour mesurer une distance le long du rail à siège (114, 116).

10. Dispositif de montage de siège (14) selon l'une des revendications 7 à 9,
**caractérisé en ce que**
le dispositif d'insertion de siège (10) comprend un organe de saisie et de retenue de siège (18) pour saisir le siège (124) transporté vers la position de montage au moyen du dispositif de transport de siège (12).

11. Dispositif de montage de siège (14) selon la revendication 10,
**caractérisé en ce que**
l'organe de saisie et de retenue de siège (18) comprend plusieurs paires de mâchoires de serrage (66, 68) capables de saisir et de retenir respectivement un pied de siège (140, 141, 142, 143) du siège (124) en étant actionnés par un opérateur (120).

12. Dispositif de montage de siège (14) selon l'une des revendications 7 à 11,
**caractérisé en ce que**
le dispositif d'insertion de siège (10) est réalisé pour abaisser le siège (124) jusqu'à venir s'engager dans un rail à siège (114, 116) de l'aéronef (146) et pour déplacer le siège (124) à l'intérieur du rail à siège (114, 116).

13. Dispositif d'insertion de siège (10) pour insérer un siège (124) dans un aéronef (146), le dispositif d'insertion de siège (10) étant réalisé pour être utilisé dans le dispositif de montage de siège (14) selon l'une des revendications 7 à 12 et/ou dans un procédé de montage de siège selon l'une des revendications 1 à 6.

14. Dispositif de transport de siège (12) pour transporter au moins un siège (124) pour un aéronef (146) depuis le fabricant de sièges jusque dans l'aéronef, le dispositif de transport de siège (12) étant réalisé pour être utilisé dans le dispositif de montage de siège (14) selon l'une des revendications 7 à 12 et/ou dans un procédé de montage de siège selon l'une des revendications 1 à 6.
